# EUROPEAN PATENT APPLICATION

(11) **EP 4 492 889 A1**
(43) Date of publication of application: **15.01.2025**
(21) Application number: 22930222.9
(22) Date of filing: 07.03.2022
(51) Int. Cl.: H04W 72/04

(54) **METHOD FOR DETERMINING SOUNDING REFERENCE SIGNAL (SRS) RESOURCE CONFIGURATION INFORMATION, AND APPARATUS USING SAME**

(71) Applicant: Beijing Xiaomi Mobile Software Co., Ltd., Beijing 100085 (CN)
(72) Inventor: GAO, Xueyuan, Beijing 100085 (CN)
(74) Representative: Dehns Germany Partnerschaft mbB
(86) International application number: PCT/CN2022/079609
(87) International publication number: WO 2023/168576

(57) **Abstract**

The embodiments of the present disclosure can be applied in the technical field of communications. Disclosed are a method for determining sounding reference signal (SRS) resource configuration information, and an apparatus using same. The method executed by a network device comprises: for a terminal device having eight transmitting antenna ports, determining that an antenna switching configuration corresponding to the terminal device includes six transmitting paths and eight receiving paths and/or eight transmitting paths and eight receiving paths (201); according to the antenna switching configuration, determining SRS resource configuration information corresponding to the terminal device (202); and sending the SRS resource configuration information to the terminal device (203). The network device configures the SRS resource configuration information, which corresponds to the antenna switching configuration including 6T8R and/or 8T8R, for the terminal device having eight transmitting antenna ports, such that a condition for supporting the terminal device in performing uplink transmission by means of at most eight antenna ports is improved, and the uplink transmission rate is increased.

## Description

### TECHNICAL FIELD

The invention relates to a field of wireless communication technologies, in particular to a method and an apparatus for determining sounding reference signal (SRS) resource configuration information.

### BACKGROUND

In a new radio (NR) wireless communication system, a network device configures an uplink resource for transmitting a sounding reference signal (SRS) for a terminal, so that the terminal can send the SRS on the uplink resource. The network device performs uplink channel measurement according to the SRS and obtains downlink channel information through channel reciprocity, to improve the downlink data transmission performance.

Currently, the terminal may need to change antenna configurations to satisfy business or scenario requirements. With the increase of the number of antenna ports on the terminal side, ensuring that an SRS resource configuration satisfies the needs of the terminal is an issue to be solved urgently.

### SUMMARY

Embodiments of the invention provide a method and an apparatus for determining sounding reference signal (SRS) resource configuration information. The network device configures SRS resource configuration information corresponding to an antenna switching configuration of 6T8R and/or 8T8R (6 transmitting chains and 8 receiving chains and/or 8 transmitting chains and 8 receiving chains) for the terminal with 8 transmitting antenna ports, to provide a condition for supporting the terminal to realize uplink transmission using a maximum number of 8 antenna ports, thereby improving an uplink transmission rate.

According to a first aspect of embodiments of the invention, a method for determining SRS resource configuration information, performed by a network device, is provided. The method includes:
determining that an antenna switching configuration corresponding to a terminal includes 6 transmitting chains and 8 receiving chains and/or 8 transmitting chains and 8 receiving chains, in which the terminal has 8 transmitting antenna ports;
determining SRS resource configuration information corresponding to the terminal according to the antenna switching configuration; and
sending the SRS resource configuration information to the terminal.

In the invention, the network device configures the SRS resource configuration information corresponding to the antenna switching configuration of 6T8R and/or 8T8R for the terminal with 8 transmitting antenna ports, to provide a condition for supporting the terminal to realize uplink transmission using a maximum number of 8 antenna ports, thereby improving the uplink transmission rate.

According to a second aspect of embodiments of the invention, a method for determining SRS resource configuration information, performed by a terminal, is provided. The method includes:

receiving SRS resource configuration information sent by a network device, in which an antenna switching configuration corresponding to the SRS resource configuration information includes 6 transmitting chains and 8 receiving chains and/or 8 transmitting chains and 8 receiving chains.

In the invention, the SRS resource configuration information received by the terminal includes the SRS resource configuration corresponding to the antenna switching configuration of 6T8R and/or 8T8R, which provides a condition for supporting the terminal to realize uplink transmission using a maximum number of 8 antenna ports, thereby improving the uplink transmission rate.

According to a third aspect of embodiments of the invention, a communication apparatus on the network device side is provided. The apparatus includes:
a processing module, configured to determine that an antenna switching configuration corresponding to a terminal includes 6 transmitting chains and 8 receiving chains and/or 8 transmitting chains and 8 receiving chains, and to determine SRS resource configuration information corresponding to the terminal according to the antenna switching configuration, in which the terminal has 8 transmitting antenna ports; and
a transceiver module, configured to send the SRS resource configuration information to the terminal.

According to a fourth aspect of embodiments of the invention, a communication apparatus on the terminal side is provided. The apparatus includes:
a transceiver module, configured to receive SRS resource configuration information sent by a network device, in which an antenna switching configuration corresponding to the SRS resource configuration information includes 6 transmitting chains and 8 receiving chains and/or 8 transmitting chains and 8 receiving chains.

According to a fifth aspect of embodiments of the invention, a communication apparatus including a processor is provided. When the processor calls computer programs stored in a memory, the method described in the first aspect above is implemented.

According to a sixth aspect of embodiments of the invention, a communication apparatus including a processor is provided. When the processor calls computer programs stored in a memory, the method described in the second aspect above is implemented.

According to a seventh aspect of embodiments of the invention, a communication apparatus including a processor and a memory is provided. The memory stores computer programs. When the processor executes the computer programs stored in the memory, the communication apparatus is caused to perform the method described in the first aspect.

According to an eighth aspect of embodiments of the invention, a communication apparatus including a processor and a memory is provided. The memory stores computer programs. When the processor executes the computer programs stored in the memory, the communication apparatus is caused to perform the method described in the second aspect.

According to a ninth aspect of embodiments of the invention, a communication apparatus including a processor and an interface circuit is provided. The interface circuit is configured to receive code instructions and transmit the code instructions to the processor. The processor is configured to run the code instructions to cause the communication apparatus to perform the method described in the first aspect above.

According to a tenth aspect of embodiments of the invention, a communication apparatus including a processor and an interface circuit is provided. The interface circuit is configured to receive code instructions and transmit the code instructions to the processor. The processor is configured to run the code instructions to cause the communication apparatus to perform the method described in the second aspect above.

According to a seventh aspect of embodiments of the invention, a system for determining SRS resource configuration information is provided. The system includes the communication apparatus described in the third aspect and the communication apparatus described in the fourth aspect. Or, the system includes the communication apparatus described in the fifth aspect and the communication apparatus described in the sixth aspect. Or, the system includes the communication apparatus described in the seventh aspect and the communication apparatus described in the eighth aspect. Or, the system includes the communication apparatus described in the ninth aspect and the communication apparatus described in the tenth aspect.

According to a twelfth aspect of embodiments of the invention, a computer-readable storage medium for storing instructions executable by the terminal is provided. When the instructions are executed, the terminal is caused to implement the method described in the first aspect above.

According to a thirteenth aspect of embodiments of the invention, a readable storage medium for storing instructions executable by the network device is provided. When the instructions are executed, the network device is caused to implement the method described in the second aspect above.

According to a fourteenth aspect of embodiments of the invention, a computer program product including computer programs is provided. When a computer runs the computer programs, the computer is caused to perform the method described in the first aspect above.

According to a fifteenth aspect of embodiments of the invention, a computer program product including computer programs is provided. When a computer runs the computer programs, the computer is caused to perform the method described in the second aspect above.

According to a sixteenth aspect of embodiments of the invention, a chip system is provided. The chip system includes at least one processor and an interface, for supporting the terminal in realizing the functions involved in the first aspect, e.g., at least one of determining or processing data and information involved in the method described above. In a possible design, the chip system further includes a memory, which is configured to store computer programs and data necessary for the terminal. The chip system may consist of chips or may include a chip and other discrete devices.

According to a seventeenth aspect of embodiments of the invention, a chip system is provided. The chip system includes at least one processor and an interface, for supporting the network device in realizing the functions involved in the second aspect, e.g., at least one of determining or processing data and information involved in the method described above. In a possible design, the chip system further includes a memory, which is configured to store computer programs and data necessary for the network device. The chip system may consist of chips or may include a chip and other discrete devices.

According to an eighth aspect of embodiments of the invention, a computer program is provided. When a computer runs the computer program, the computer is caused to implement the method described in the first aspect.

According to a nineteenth aspect of embodiments of the invention, a computer program is provided. When a computer runs the computer program, the computer is caused to implement the method described in the second aspect.

### BRIEF DESCRIPTION OF THE DRAWINGS

In order to clearly illustrate technical solutions of embodiments of the invention or background technologies, a description of drawings used in embodiments of the invention or the background technologies is given below.
FIG. 1 is a schematic diagram of a communication system according to an embodiment of the invention.
FIG. 2 is a flowchart of a method for determining sounding reference signal (SRS) resource configuration information according to an embodiment of the invention.
FIG. 3 is a schematic diagram of an antenna structure of a terminal according to an embodiment of the invention.
FIG. 4 is a flowchart of a method for determining SRS resource configuration information according to another embodiment of the invention.
FIG. 5 is a schematic diagram of an antenna structure of a terminal according to another embodiment of the invention.
FIG. 6 is a schematic diagram of an antenna structure of a terminal according to another embodiment of the invention.
FIG. 7 is a flowchart of a method for determining SRS resource configuration information according to a further embodiment of the invention.
FIG. 8 is a flowchart of a method for determining SRS resource configuration information according to a further embodiment of the invention.
FIG. 9 is a flowchart of a method for determining SRS resource configuration information according to a further embodiment of the invention.
FIG. 10 is a schematic diagram of a communication apparatus according to an embodiment of the invention.
FIG. 11 is a schematic diagram of a communication apparatus according to another embodiment of the invention.
FIG. 12 is a schematic diagram of a chip according to an embodiment of the invention.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the invention. Instead, they are merely examples of apparatuses and methods consistent with aspects related to the invention as recited in the appended claims.

For ease of understanding, the terms involved in the invention are introduced firstly.
1. Sounding reference signal (SRS). The SRS is used for uplink channel information acquisition, downlink channel information acquisition and uplink beam management.
2. Configuration of nTmR

For nTmR, n represents a number of transmitting chains, m represents a number of receiving chains, T or Tx represents a transmitting chain, and R or Rx represents a receiving chain. For example, 4T4R, which can also be referred to as 4 transmitting and 4 receiving, indicates that an antenna switching configuration includes 4 transmitting chains and 4 receiving chains.

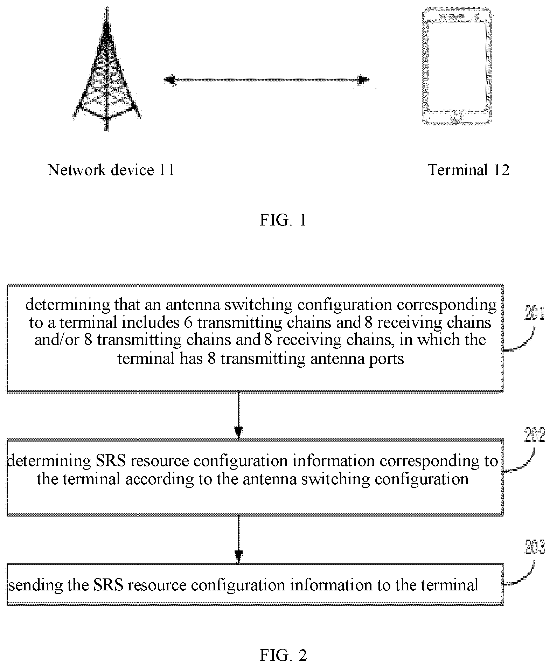

FIG. 1 is a schematic diagram of a communication system according to an embodiment of the invention. The communication system may include, but is not limited to, one network device and one terminal. The number and form of devices shown in FIG. 1 are only for illustrative purposes and do not constitute a limitation on the embodiments of the invention, and two or more network devices and two or more terminals may be included in practical applications. The communication system shown in FIG. 1 includes, for example, one network device 11 and one terminal 12.

It should be noted that the technical solutions of embodiments of the invention can be used in various communication systems, such as, a long term evolution (LTE) system, a 5th generation (5G) mobile communication system, a 5G new radio (NR) system, or other future new mobile communication systems.

The network device 11 in the embodiments of the invention is an entity on a network side for transmitting or receiving signals. For example, the network device 11 may be an evolved NodeB (eNB), a transmission reception point (TRP), a next generation NodeB (gNB) in a NR system, a base station in other future mobile communication systems, or an access point in a wireless fidelity (WiFi) system. The specific technology and specific device form adopted by the network device are not limited in the embodiments of the invention. The network device provided by the embodiments of the invention may consist of a central unit (CU) and a distributed unit (DU). The CU may also be called a control unit. The usage of CU-DU structure allows a protocol layer of the network device, such as a base station, to be split, some functions of the protocol layer are placed in the CU for centralized control, and some or all of the remaining functions of the protocol layer are distributed in the DU, which is intensively controlled by the CU.

The terminal 12 in the embodiments of the invention is an entity on a user side for receiving or transmitting signals, such as a cellular phone. The terminal may also be referred to as a terminal, a user equipment (UE), a mobile station (MS), a mobile terminal (MT), and the like. The terminal can be a car with communication functions, a smart car, a mobile phone, a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiments of the invention.

It is understood that the communication system described in the embodiments of the invention is intended to more clearly illustrate the technical solutions of the embodiments of the invention, and does not constitute a limitation on the technical solutions provided by the embodiments of the invention. It is understood by those skilled in the art that as the system architecture evolves and new business scenarios emerge, the technical solutions provided by the embodiments of the invention are also applicable to similar technical problems.

FIG. 2 is a flowchart of a method for determining SRS resource configuration information according to an embodiment of the invention. The method is performed by a network device. As illustrated in FIG. 2, the method includes, but is not limited to, the following steps.

At step 201, it is determined that an antenna switching configuration corresponding to a terminal includes 6 transmitting chains and 8 receiving chains and/or 8 transmitting chains and 8 receiving chains, in which the terminal has 8 transmitting antenna ports.

Optionally, since the antenna switching configuration on the terminal side may be different, the network device may first determine the antenna switching configuration on the terminal side when determining an SRS resource configuration corresponding to the terminal. For example, a terminal usually has 8 receiving antenna ports. For the terminal with 8 receiving antenna ports, it can be determined that the corresponding antenna switching configuration of the terminal includes at least one of 6 transmitting chains or 8 receiving chains, hereinafter referred to as 6T8R, and 8 transmitting chains and 8 receiving chains, hereinafter referred to as 8T8R.

At step 202, SRS resource configuration information corresponding to the terminal is determined according to the antenna switching configuration.

Since the antenna configuration may include different numbers of transmitting ports and receiving ports, the corresponding SRS resource configuration may be different. In the invention, the network device determines the corresponding SRS resource configuration information according to the specific antenna configuration on the terminal side.

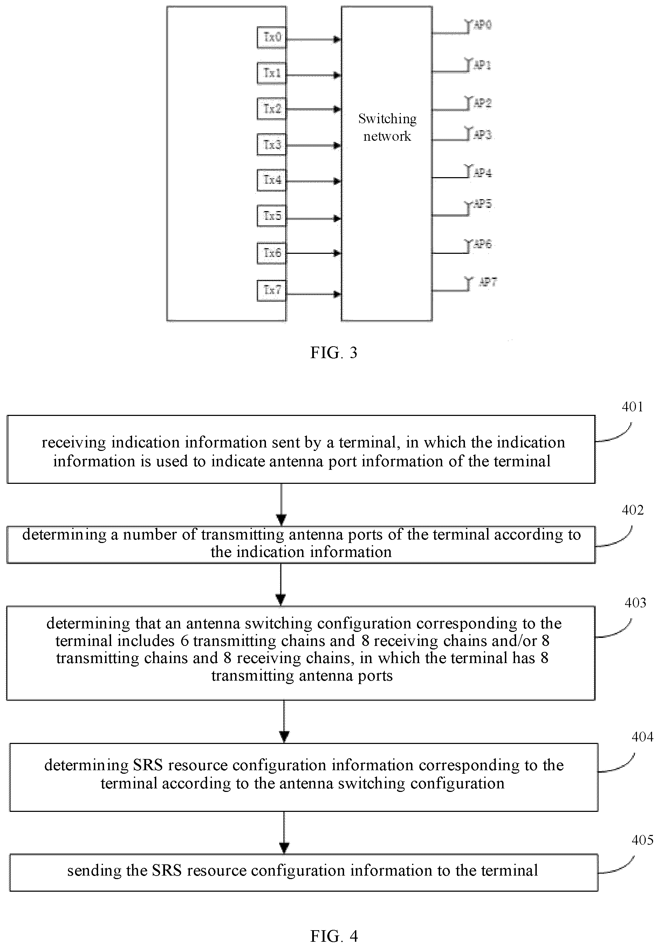

For example, an antenna structure on the terminal side is shown in FIG. 3, Txi (i=0, 1, 2......7) illustrates the identifiers of transmitting antenna ports, APj (j=0, 1, 2......7) illustrates the identifiers of receiving antennas, and the transmitting antenna ports and the receiving antennas are connected through a switching network. That is, the terminal includes 8 transmitting antenna ports and 8 receiving antenna ports.

Optionally, for a non-periodic SRS resource, the network device may configure, for the terminal, the SRS resource configuration information including at most one non-periodic SRS resource set. The non-periodic SRS resource set includes one SRS resource, and the one SRS resource includes 8 SRS antenna ports. Each time the terminal receives trigger information that triggers the non-periodic SRS resource set, it sends the SRS on a resource indicated by the non-periodic SRS resource configuration information.

Optionally, for a periodic SRS resource or a semi-persistent SRS resource, the network device may configure, for the terminal, the SRS resource configuration information including at most two SRS resource sets. The SRS resource set is a periodic SRS resource set or a semi-persistent SRS resource set. That is, the SRS resource configuration information may at most include two periodic SRS resource sets, or two semi-persistent SRS resource sets, or one periodic SRS resource set and one semi-persistent SRS resource set. Each SRS resource set includes one SRS resource, and the one SRS resource includes 8 SRS antenna ports.

Optionally, if the SRS resource configuration information includes at most two semi-persistent SRS resource sets, only one semi-persistent SRS resource set can be activated at a time, so that the terminal sends the SRS based on the activated semi-persistent SRS resource set. For scheduling flexibility, the two semi-persistent SRS resource sets may be configured to correspond to different periods respectively, so that the terminal can send the SRS during an activated period of any of the semi-persistent SRS resource sets periodically according to the period of the activated semi-persistent SRS resource set.

Optionally, for a periodic SRS resource or a semi-persistent SRS resource, the network device may also determine, according to whether or not the terminal supports reporting a capability of this feature, to configure, for the terminal, the corresponding SRS resource configuration information including at most three SRS resource sets. The SRS resource sets are periodic SRS resource sets or include at most two semi-persistent SRS resource sets. For example, one periodic SRS resource set and two semi-persistent SRS resource sets are configured. Each SRS resource set includes one SRS resource, and the one SRS resource includes 8 antenna ports. If two semi-persistent SRS resource sets are configured, only one SRS resource set needs to be activated at a time. In addition, in order to ensure flexible scheduling, the two semi-persistent SRS resource sets may correspond to different periods respectively, so that the terminal can send the SRS during an activated period of any of the semi-persistent SRS resource sets periodically according to the period of the activated semi-persistent SRS resource set.

The capability of the terminal may be reported by the terminal to the network device or may be determined by the network device according to relevant information reported by the terminal, which is not limited in this invention.

At step 203, the SRS resource configuration information is sent to the terminal.

Optionally, the network device may send the SRS resource configuration information to the terminal via a radio resource control (RRC) message or via other messages, which is not limited in the invention. After switching the antenna configuration, the terminal can send the SRS according to the SRS resource configuration information corresponding to the switched antenna configuration and sent by the network device, so that the network device can perform uplink channel measurement according to the received SRS and determine downlink channel information through channel reciprocity.

In the invention, for a terminal configured with 8 transmitting antenna ports, the network device may first determine that the antenna switching configuration corresponding to the terminal includes 6T8R and/or 8T8R, and then determine the SRS resource configuration information corresponding to the terminal according to the antenna switching configuration and send the SRS resource configuration information to the terminal. Therefore, the network device configures the SRS resource configuration information corresponding to the antenna switching configuration of 6T8R and/or 8T8R for the terminal with 8 transmitting antenna ports, to provide a condition for supporting the terminal to realize uplink transmission using a maximum number of 8 antenna ports, thereby improving the uplink transmission rate.

FIG. 4 is a flowchart of a method for determining SRS resource configuration information according to an embodiment of the invention. The method is performed by a network device. As illustrated in FIG. 4, the method includes, but is not limited to, the following steps.

At step 401, indication information sent by a terminal is received, in which the indication information is used to indicate antenna port information of the terminal.

At step 402, a number of transmitting antenna ports of the terminal is determined according to the indication information.

Optionally, the network device may receive the above indication information via an RRC message or a random access message, which is not limited in the invention.

Optionally, the indication information may include a number of antenna ports on the terminal side, or any other information that indicates the number of antenna ports on the terminal side, e.g., antenna structure information, which is not limited in the invention.

Optionally, the indication information may include any of the following: a maximum number of supported SRS resource sets, a supported antenna switching configuration or a combination of supported antenna switching configurations, an antenna structure type indicator, or a supported SRS resource configuration identifier.

For example, if the indication information indicates that the antenna switching configuration supported by the terminal includes: 8TmR, the network device may determine that the number of transmitting antenna ports on the terminal side is 8.

If the network device determines that the antenna structure on the terminal side is as shown in FIG. 2a according to the antenna structure type indicator of the terminal in the indication information, the network device may determine that the number of transmitting antenna ports on the terminal side is 8.

The antenna structure type indicator may be any identifier that can be used to represent the antenna structure type, based on which the network device can determine the antenna structure type of the terminal. Or, the antenna structure type indicator may be a combination of values of n and m in the antenna configuration of nTmR, so that the network device determines the antenna structure type of the terminal according to the combination of values of n and m.

Since different antenna port combinations correspond to different SRS resource configurations, the terminal may also directly identify its corresponding antenna port information by indicating the supported SRS resource configuration identifier.

It should be noted that the above several forms for indicating the antenna port information on the terminal side are only examples and cannot be used as a limitation on the terminal reporting its antenna port in the invention.

At step 403, it is determined that an antenna switching configuration corresponding to the terminal includes 6 transmitting chains and 8 receiving chains and/or 8 transmitting chains and 8 receiving chains, in which the terminal has 8 transmitting antenna ports.

At step 404, SRS resource configuration information corresponding to the terminal is determined according to the antenna switching configuration.

At step 405, the SRS resource configuration information is sent to the terminal.

Regarding the specific implementation of the above steps 403-405, reference can be made to detailed descriptions of any of the embodiments of the invention, which will not be repeated herein.

Optionally, for the antenna switching configuration of 6T8R corresponding to the terminal, for a periodic or semi-persistent SRS resource, generally, the network device may determine that the SRS resource configuration information corresponding to the terminal includes at most two SRS resource sets. That is, the network device may configure at most two periodic SRS resource sets, or two semi-persistent SRS resource sets, or one periodic SRS resource set and one semi-persistent SRS resource set, for the terminal.

The network device may also determine that the SRS resource configuration information corresponding to the terminal includes at most three SRS resource sets according to the capability of the terminal, for example, a maximum number of SRS resource sets supported by the terminal being 3. The SRS resource set is a periodic SRS resource set or a semi-persistent resource set. For example, one periodic SRS resource set and two semi-persistent SRS resource sets are configured for the terminal. If two semi-persistent SRS resource sets are configured, only one SRS resource set needs to be activated at a time. In addition, for scheduling flexibility, the two semi-persistent SRS resource sets correspond to different periods, so that the terminal can send the SRS during an activated period of any of the semi-persistent SRS resource sets periodically according to the period of the activated semi-persistent SRS resource set.

The way in which each SRS resource set or SRS resource is configured can be determined according to the antenna implementation structure on the terminal side.

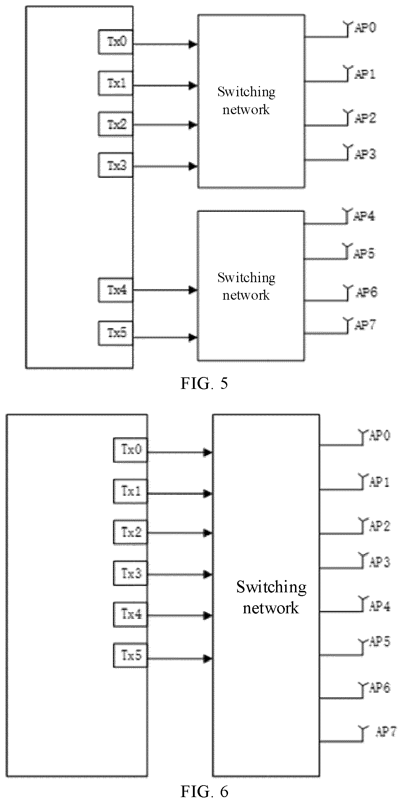

For example, the antenna structure on the terminal side is shown in FIG. 5, in which Txi (i=0, 1, 2......5) illustrates the identifiers of transmitting antenna ports, APj (j=0, 1, 2......7) illustrates the identifiers of receiving antennas, and the transmitting antenna ports and the receiving antennas are connected through a switching network. For the structure shown in FIG. 5, the network device may determine that each periodic SRS resource set or each semi-persistent SRS resource set includes 3 SRS resources, in which one SRS resource includes 4 antenna ports, and each of the other two SRS resources includes 2 antenna ports. That is, the corresponding SRS resource configuration information is shown in Table 1.

**Table 1**

| Transmitting antenna port \SRS resource | #1 | #2 | #3 |
|---|---|---|---|
| Tx0 | AP0 | | |
| Tx1 | AP1 | | |
| Tx2 | AP2 | | |
| Tx3 | AP3 | | |
| Tx4 | | AP4 | AP6 |
| Tx5 | | AP5 | AP7 |

It is noted that for this configuration, there may or may not be a guard interval between resource #1 and resource #2 or resource #3, which is not limited in the invention. Since the terminal needs to switch the receiving antennas in the antenna switching configuration corresponding to resource #2 and resource #3, which requires a certain amount of time for switching, a guard interval is required between resource #2 and resource #3, and the terminal does not send the SRS during the guard interval. The guard interval may be 1 symbol or several symbols, which is not limited in the invention.

Or, if the antenna structure on the terminal side is as shown in FIG. 6, the network device may configure an SRS resource set including 2 SRS resources, in which each SRS resource includes 4 antenna ports.

In this case, the corresponding SRS resource configuration information may be as shown in Table 2.

**Table 2**

| Transmitting antenna port \SRS resource | #1 | #2 |
|---|---|---|
| Tx0 | AP0 | |
| Tx1 | AP1 | |
| Tx2 | AP2 | AP4 |
| Tx3 | AP3 | AP5 |
| Tx4 | | AP6 |
| Tx5 | | AP7 |

It should be noted that for this configuration, for some of the transmitting antenna ports, sounding may be performed for more than one time. Since the terminal needs to switch the receiving antennas in the antenna switching configuration corresponding to resource #1 and resource #2, which requires a certain amount of time for switching, a guard interval is required between resource #1 and resource #2, and the terminal does not send the SRS during the guard interval. The guard interval may be 1 symbol or several symbols, which is not limited in the invention.

Or, if the antenna structure on the terminal side is as shown in FIG. 6, the network device may configure one SRS resource set including 4 SRS resources, in which each SRS resource includes 2 antenna ports.

In this case, the SRS resource configuration information may be as shown in Table 3.

**Table 3**

| Transmitting antenna port \SRS resource | #1 | #2 | #3 | #4 |
|---|---|---|---|---|
| Tx0 | AP0 | | | |
| Tx1 | AP1 | | | |
| Tx2 | | AP2 | | |
| Tx3 | | AP3 | | |
| Tx4 | | | AP4 | AP6 |
| Tx5 | | | AP5 | AP7 |

It should be noted that for this configuration, for some of the transmitting antenna ports sounding may be performed for more than one time. There may or may not be a guard interval among resource #1, resource #2 and resource #3, which is not limited in the invention. Since the terminal needs to switch the receiving antennas in the antenna switching configuration corresponding to resource #3 and resource #4, which requires a certain amount of time for switching, a guard interval is required between resource #3 and resource #4, and the terminal does not send the SRS during the guard interval. The guard interval may be 1 symbol or several symbols, which is not limited in the invention.

Or, if the antenna structure on the terminal side is as shown in FIG. 6, the network device may configure one SRS resource set including 4 SRS resources, in which each SRS resource includes 4 antenna ports.

In this case, the SRS resource configuration information may be as shown in Table 4.

**Table 4**

| Transmitting antenna port \SRS resource | #1 | #2 | #3 | #4 |
|---|---|---|---|---|
| Tx0 | AP0 | | AP0 | |
| Tx1 | AP1 | | AP1 | |
| Tx2 | AP2 | AP4 | | AP2 |
| Tx3 | AP3 | AP5 | | AP3 |
| Tx4 | | AP6 | AP6 | AP4 |
| Tx5 | | AP7 | AP7 | AP5 |

It should be noted that for this configuration, for all the transmitting antenna ports, sounding may be performed for two times. Since the terminal needs to switch antennas in the antenna switching configuration corresponding to each resource, which requires a certain amount of time for switching, a guard interval is required between any two of the resources, and the terminal does not send the SRS during the guard interval. The guard interval may be 1 symbol or several symbols, which is not limited in the invention.

In the invention, after receiving the indication information sent by the terminal, the network device first determines the number of transmitting antenna ports in the terminal, and for the terminal with 8 transmitting antenna ports, configures the SRS resource configuration information corresponding to the antenna switching configuration of 6T8R and/or 8T8R, to provide a condition for supporting the terminal to realize uplink transmission using a maximum number of 8 antenna ports, thereby improving the uplink transmission rate.

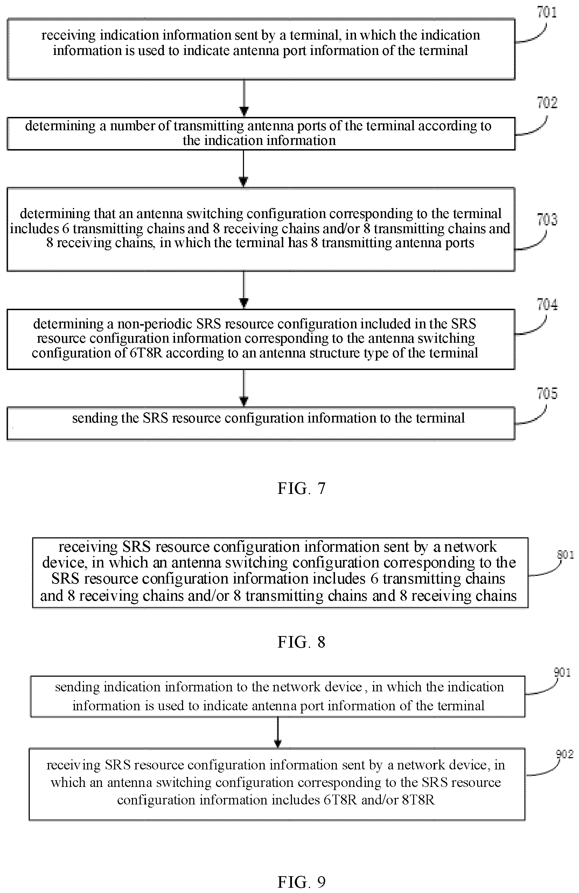

FIG. 7 is a flowchart of a method for determining SRS resource configuration information according to an embodiment of the invention. The method is performed by a network device. As illustrated in FIG. 7, the method includes, but is not limited to, the following steps.

At step 701, indication information sent by a terminal is received, in which the indication information is used to indicate antenna port information of the terminal.

At step 702, a number of transmitting antenna ports of the terminal is determined according to the indication information.

At step 703, it is determined that an antenna switching configuration corresponding to the terminal includes 6 transmitting chains and 8 receiving chains and/or 8 transmitting chains and 8 receiving chains, in which the terminal has 8 transmitting antenna ports.

At step 704, a non-periodic SRS resource configuration included in SRS resource configuration information corresponding to the antenna switching configuration of 6T8R is determined according to an antenna structure type of the terminal.

Optionally, if the antenna structure type of the terminal is a first type, it is determined that the non-periodic SRS resource configuration includes at most 3 non-periodic SRS resource sets.

The first type of antenna structure is shown in FIG. 5. In this case, the corresponding non-periodic SRS resource may be as shown in Table 1. That is, the number of non-periodic SRS resources included in the non-periodic SRS resource configuration is 3, in which one non-periodic SRS resource includes 4 antenna ports, and each of the other two non-periodic SRS resources includes 2 antenna ports.

It is noted that the three SRS resources in Table 1 may be located in a single non-periodic SRS resource set, or may be located in different non-periodic SRS resource sets, which is not limited in the invention.

Alternatively, if the antenna structure type of the terminal is a second type, it is determined that the non-periodic SRS resource configuration includes at most two non-periodic SRS resource sets.

The second type of antenna structure is shown in FIG. 6. In this case, the corresponding non-periodic SRS resource may be as shown in Table 2. That is, the number of non-periodic SRS resources included in the non-periodic SRS resource configuration is 2, in which each non-periodic SRS resource includes 4 antenna ports, and there is a guard interval between the two non-periodic SRS resources.

It is noted that the 2 SRS resources in Table 2 may be located in a single non-periodic SRS resource set, or may be located in different non-periodic SRS resource sets, which is not limited in the invention.

Alternatively, if the antenna structure type of the terminal is a second type, it is determined that the non-periodic SRS resource configuration includes at most 4 non-periodic SRS resource sets.

The second type of antenna structure is shown in FIG. 6. In this case, the corresponding non-periodic SRS resource may be as shown in Table 3. That is, the number of non-periodic SRS resources included in the non-periodic SRS resource configuration is 4, in which each non-periodic SRS resource includes 2 antenna ports, and there is a guard interval between at least two non-periodic SRS resources.

It is noted that the 4 SRS resources in Table 3 may be located in a single non-periodic SRS resource set, or may be located in different non-periodic SRS resource sets, which is not limited in the invention.

Alternatively, if the antenna structure type of the terminal is a second type, it is determined that the non-periodic SRS resource configuration includes at most 4 non-periodic SRS resource sets.

The second type of antenna structure is shown in FIG. 6. In this case, the corresponding non-periodic SRS resource may be as shown in Table 4. That is, the number of non-periodic SRS resources included in the non-periodic SRS resource configuration is 4, in which each non-periodic SRS resource includes 4 antenna ports, and there is a guard interval between every two non-periodic SRS resources.

It is noted that the 4 SRS resources in Table 4 may be located in a single non-periodic SRS resource set, or may be located in different non-periodic SRS resource sets, which is not limited in the invention.

Optionally, the network device may determine the guard interval between the non-periodic SRS resource sets according to a protocol. For example, if the protocol specifies that there is no guard interval between the non-periodic SRS resource sets, the network device may not set any guard interval. Alternatively, if the protocol specifies that a symbol is set between the non-periodic SRS resource sets as a guard interval, the network device may set the guard interval between the non-periodic SRS resource sets to be 1 symbol, which is not limited in the invention.

Or, the network device may determine the guard interval between the non-periodic SRS resource sets according to a configuration of the network device. That is, when the network device allocates resources, it ensures that the allocated resources leave enough time for the terminal to switch antennas. In this case, there may or may not be a guard interval between the non-periodic SRS resource sets, which is not limited in the invention.

Correspondingly, the network device may determine the guard interval between the non-periodic SRS resources according to a protocol, or determine the guard interval between the non-periodic SRS resources according to a configuration of the network device.

Or, the guard interval between the non-periodic SRS resources may be determined according to the capability of the terminal.

That is, the network device can also configure different guard intervals according to different antenna switching implementations of the terminal. In this case, the terminal needs to report its own antenna switching implementation capability for configuration, and the network device configures the specific guard interval according to the specific capability of the terminal.

At step 705, the SRS resource configuration information is sent to the terminal.

Regarding the specific implementation of the above steps 701-705, reference may be made to detailed descriptions of any of the embodiments in the invention, which will not be repeated herein.

In the invention, after receiving the indication information sent by the terminal, the network device first determines the number of transmitting antenna ports in the terminal, and for the terminal with 8 transmitting antenna ports, determines the non-periodic SRS resource configuration included in the SRS resource configuration information corresponding to the antenna switching configuration of 6T8R according to the antenna structure type of the terminal, to provide a condition for supporting the terminal to realize uplink transmission using a maximum number of 8 antenna ports, thereby improving the uplink transmission rate.

FIG. 8 is a flowchart of a method for determining SRS resource configuration information according to an embodiment of the invention. The method is performed by a terminal. As illustrated in FIG. 8, the method includes, but is not limited to, the following steps.

At step 801, SRS resource configuration information sent by a network device is received, in which an antenna switching configuration corresponding to the SRS resource configuration information includes 6 transmitting chains and 8 receiving chains and/or 8 transmitting chains and 8 receiving chains.

Generally, the terminal has 8 receiving antenna ports. For the terminal with 8 receiving antenna ports, the network device determines that the corresponding antenna switching configuration of the terminal includes at least one of 6T8R or 8T8R, and determines its corresponding SRS resource configuration information according to the antenna switching configuration.

For example, an antenna structure on the terminal side is shown in FIG. 3, Txi (i=0, 1, 2......7) illustrates the identifiers of transmitting antenna ports, APj (j=0, 1, 2......7) illustrates the identifiers of receiving antennas, and the transmitting antenna ports and the receiving antennas are connected through a switching network. That is, the terminal includes 8 transmitting antenna ports and 8 receiving antenna ports.

Optionally, the antenna switching configuration corresponding to the terminal is 8T8R, and the SRS resource configuration information may include at most one non-periodic SRS resource set. The non-periodic SRS resource set includes one SRS resource, and the one SRS resource includes 8 SRS antenna ports. Each time the terminal receives trigger information that triggers the non-periodic SRS resource set, it sends the SRS on a resource indicated by the non-periodic SRS resource configuration information.

Or, the antenna switching configuration corresponding to the terminal is 8T8R, and the SRS resource configuration information includes at most two SRS resource sets, in which the SRS resource set is a periodic SRS resource set or a semi-persistent SRS resource set. That is, the SRS resource configuration information may include at most two periodic SRS resource sets, or two semi-persistent SRS resource sets, or one periodic SRS resource set and one semi-persistent SRS resource set. One SRS resource set includes one SRS resource, and the one SRS resource includes 8 SRS antenna ports.

Optionally, if the SRS resource configuration information includes at most two semi-persistent SRS resource sets, only one semi-persistent SRS resource set can be activated at a time, so that the terminal sends the SRS based on the activated semi-persistent SRS resource set. For scheduling flexibility, the two semi-persistent SRS resource sets may correspond to different periods respectively, so that the terminal can send the SRS during an activated period of any of the semi-persistent SRS resource sets periodically according to the period of the activated semi-persistent SRS resource set.

Or, the antenna switching configuration corresponding to the terminal is 8T8R, the maximum number of SRS resource sets supported by the terminal is 3, the SRS resource configuration information includes at most three periodic SRS resource sets. The SRS resource set is a periodic SRS resource set or a semi-persistent SRS resource set. For example, one periodic SRS resource set and two semi-persistent SRS resource sets are configured. One SRS resource set includes one SRS resource, and the one SRS resource includes 8 antenna ports. If two semi-persistent SRS resource sets are configured, only one SRS resource set needs to be activated at a time. In addition, in order to ensure flexible scheduling, the two semi-persistent SRS resource sets may be configured with different periods respectively, so that the terminal can send the SRS during an activated period of any of the semi-persistent SRS resource sets periodically according to the period of the activated semi-persistent SRS resource set.

The capability of the terminal may be reported by the terminal to the network device or may be determined by the network device according to relevant information reported by the terminal, which is not limited in this invention.

Optionally, the network device may send the SRS resource configuration information to the terminal via a radio resource control (RRC) message or via other messages, which is not limited in the invention. After switching the antenna configuration, the terminal can send the SRS according to the SRS resource configuration information corresponding to the switched antenna configuration and sent by the network device, so that the network device can perform uplink channel measurement according to the received SRS and determine downlink channel information through channel reciprocity.

In the invention, the network device may configure the corresponding SRS resource configuration information for the terminal whose antenna switching configuration includes 6T8R and/or 8T8R, so that the terminal may realize uplink transmission using a maximum number of 8 antenna ports, thereby improving the uplink transmission rate.

FIG. 9 is a flowchart of a method for determining SRS resource configuration information according to an embodiment of the invention. The method is performed by a terminal. As illustrated in FIG. 9, the method includes, but is not limited to, the following steps.

At step 901, indication information is sent to a network device, in which the indication information is used to indicate antenna port information of the terminal.

Optionally, the terminal may send the above indication information via an RRC message or a random access message, which is not limited in the invention.

Optionally, the indication information may include a number of antenna ports on the terminal side, or any other information that indicates the number of antenna ports on the terminal side, e.g., antenna structure information, which is not limited in the invention.

Optionally, the indication information may include any of the following: a maximum number of supported SRS resource sets, a supported antenna switching configuration or a combination of supported antenna switching configurations, an antenna structure type indicator, or a supported SRS resource configuration identifier.

For example, if the indication information indicates that the antenna switching configuration supported by the terminal includes: 8TmR, the network device may determine that the number of transmitting antenna ports on the terminal side is 8.

If the network device determines that the antenna structure on the terminal side is as shown in FIG. 2a according to the antenna structure type indicator of the terminal in the indication information, the network device may determine that the number of transmitting antenna ports on the terminal side is 8.

The antenna structure type indicator may be any identifier that can be used to represent the antenna structure type, based on which the network device can determine the antenna structure type of the terminal. Or, the antenna structure type indicator may be a combination of values of n and m in the antenna configuration of nTmR, so that the network device determines the antenna structure type of the terminal according to the combination of values of n and m.

Since different antenna port combinations correspond to different SRS resource configurations, the terminal may also directly identify its corresponding antenna port information by indicating the supported SRS resource configuration identifier.

It should be noted that the above several forms for indicating the antenna port information on the terminal side are only examples and cannot be used as a limitation on the terminal reporting its antenna port in the invention.

At step 902, SRS resource configuration information sent by the network device is received, in which an antenna switching configuration corresponding to the SRS resource configuration information includes 6T8R and/or 8T8R.

Optionally, for the antenna switching configuration of 6T8R corresponding to the terminal, the SRS resource configuration information configured by the network device includes at most two SRS resource sets, in which the SRS resource set is a periodic SRS resource set or a semi-persistent SRS resource set. That is, the network device may configure at most two periodic SRS resource sets, or two semi-persistent SRS resource sets, or one periodic SRS resource set and one semi-persistent SRS resource set, for the terminal.

Or, the antenna switching configuration corresponding to the terminal includes the configuration of 6T8R, the maximum number of SRS resource sets supported by the terminal is 3, and the SRS resource configuration information includes at most three SRS resource sets, in which the SRS resource set is a periodic SRS resource set or a semi-persistent SRS resource set. For example, one periodic SRS resource set and at most two semi-persistent SRS resource sets are configured. If two semi-persistent SRS resource sets are configured, only one SRS resource set needs to be activated at a time. In addition, for scheduling flexibility, the two semi-persistent SRS resource sets correspond to different periods, so that the terminal can send the SRS during an activated period of any of the semi-persistent SRS resource sets periodically according to the period of the activated semi-persistent SRS resource set.

Optionally, the SRS resource configuration information may also be related to the antenna implementation structure on the terminal side. For example, the antenna structure on the terminal side is as shown in FIG. 5, in which Txi (i=0, 1, 2......5) illustrates the identifiers of transmitting antenna ports, APj (j=0, 1, 2......7) illustrates the identifiers of receiving antennas, and the transmitting antenna ports and the receiving antennas are connected through a switching network.

For the structure shown in FIG. 5, one SRS resource set may include 3 SRS resources, in which one SRS resource includes 4 antenna ports, and each of the other two SRS resources includes 2 antenna ports. That is, the corresponding SRS resource configuration information is shown in Table 1.

Or, if the antenna structure on the terminal side is as shown in FIG. 6, one SRS resource set may include 2 SRS resources, in which one SRS resource includes 4 antenna ports. In this case, the corresponding SRS resource configuration information may be as shown in Table 2 above.

Or, if the antenna structure on the terminal side is as shown in FIG. 6, the network device may also configure one SRS resource set including 4 SRS resources, in which one SRS resource includes 2 antenna ports. In this case, the SRS resource configuration information may be as shown in Table 3 above.

Or, if the antenna structure on the terminal side is as shown in FIG. 6, the network device may also configure one SRS resource set including 4 SRS resources, in which one SRS resource includes 4 antenna ports. In this case, the SRS resource configuration information can be shown in Table 4.

Optionally, for a non-periodic SRS resource set, if the antenna structure on the terminal side is a first type, i.e., the antenna structure of the terminal is as shown in FIG. 5, the non-periodic SRS resource configuration includes at most three non-periodic SRS resource sets. In such a case, the corresponding non-periodic SRS resource may be as shown in Table 1. That is, the number of non-periodic SRS resources included in the non-periodic SRS resource configuration is 3, in which one non-periodic SRS resource includes 4 antenna ports, and each of the other two non-periodic SRS resources includes 2 antenna ports.

It is noted that the three SRS resources in Table 1 may be located in a single non-periodic SRS resource set, or may be located in different non-periodic SRS resource sets, which is not limited in the invention.

Or, the antenna structure type of the terminal is a second type, the non-periodic SRS resource configuration includes at most two non-periodic SRS resource sets, in which the antenna switching configuration corresponding to the terminal is 6T8R.

The second type of antenna structure is shown in FIG. 6. In this case, the corresponding non-periodic SRS resource may be as shown in Table 2. That is, the number of non-periodic SRS resources included in the non-periodic SRS resource configuration is 2, in which each non-periodic SRS resource includes 4 antenna ports, and there is a guard interval between the two non-periodic SRS resources.

It is noted that the 2 SRS resources in Table 2 may be located in a single non-periodic SRS resource set, or may be located in different non-periodic SRS resource sets, which is not limited in the invention.

Or, the antenna structure type of the terminal is a second type, the non-periodic SRS resource configuration includes at most four non-periodic SRS resource sets, in which the antenna switching configuration corresponding to the terminal is 6T8R.

The second type of antenna structure is shown in FIG. 6. In this case, the corresponding non-periodic SRS resource may be as shown in Table 3. That is, the number of non-periodic SRS resources included in the non-periodic SRS resource configuration is 4, in which each non-periodic SRS resource includes 2 antenna ports, and there is a guard interval between at least two non-periodic SRS resources.

It is noted that the 4 SRS resources in Table 3 may be located in a single non-periodic SRS resource set, or may be located in different non-periodic SRS resource sets, which is not limited in the invention.

Or, in the case where the antenna structure type of the terminal is the second type, the non-periodic SRS resource configuration includes at most four non-periodic SRS resource sets, in which the antenna switching configuration corresponding to the terminal is 6T8R.

The second type of antenna structure is shown in FIG. 6. In this case, the corresponding non-periodic SRS resource may be as shown in Table 4. That is, the number of non-periodic SRS resources included in the non-periodic SRS resource configuration is 4, in which each non-periodic SRS resource includes 4 antenna ports, and there is a guard interval between every two non-periodic SRS resources.

It is noted that the 4 SRS resources in Table 4 may be located in a single non-periodic SRS resource set, or may be located in different non-periodic SRS resource sets, which is not limited in the invention.

Optionally, there may or may not be a guard interval between the above non-periodic SRS resource sets. The size of the guard interval and whether the guard interval needs to be included may be determined by the network device according to a protocol, or may be determined by the network device to ensure that the allocated resources leave enough time for the terminal to switch antennas, which is not limited in the invention.

Correspondingly, there may or may not be a guard interval between the non-periodic SRS resources, which may be determined by the network device according to a protocol, or according to a configuration of the network device, or according to a capability of the terminal, which is not limited in the invention.

Detailed descriptions of the above antenna structure implementation and corresponding resource configuration information may be referred to the descriptions of other embodiments of the invention, which will not be repeated herein.

In the invention, the terminal configured with 8 transmitting ports first reports its own antenna port information to the network device, and then receives the corresponding SRS resource configuration information configured by the network device, so that the terminal can realize uplink transmission using a maximum of 8 antenna ports, thereby improving the uplink transmission rate.

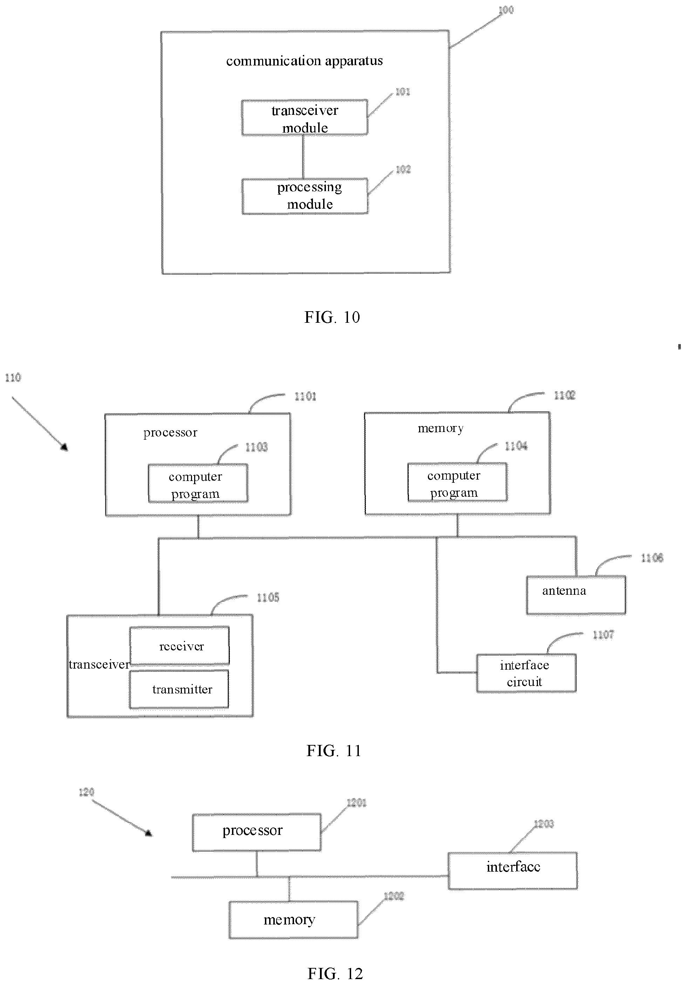

FIG. 10 is a schematic diagram of a communication apparatus 100 according to an embodiment of the invention. The communication apparatus 100 shown in FIG. 10 may include a transceiver module 101 and a processing module 102. The transceiver module 101 may include a transmitting module and/or a receiving module. The transmitting module is used for realizing a transmitting function, and the receiving module is used for realizing a receiving function. The transceiver module 101 may realize the transmitting function and/or the receiving function.

It is understood that the communication apparatus 100 may be a network device, an apparatus in the network device, or an apparatus capable of being used in combination with the network device.

The communication apparatus 100 is located on the network device side.

The processing module 102 is configured to determine that an antenna switching configuration corresponding to a terminal comprises 6 transmitting chains and 8 receiving chains and/or 8 transmitting chains and 8 receiving chains, and to determine SRS resource configuration information corresponding to the terminal according to the antenna switching configuration, in which the terminal has 8 transmitting antenna ports.

The transceiver module 101 is configured to send the SRS resource configuration information to the terminal.

Optionally, the processing module 102 is configured to:
determine that the SRS resource configuration information corresponding to the terminal includes at most one non-periodic SRS resource set; or
determine that the SRS resource configuration information corresponding to the terminal includes at most two SRS resource sets, in which the SRS resource set is a periodic SRS resource set or a semi-persistent SRS resource set; or
determine that a maximum number of SRS resource sets supported by the terminal is 3, and the SRS resource configuration information corresponding to the terminal includes at most three SRS resource sets, in which an SRS resource set is a periodic SRS resource set or a semi-persistent SRS resource set, and the antenna switching configuration corresponding to the terminal is 8T8R.

Optionally, one SRS resource set includes one SRS resource, and one SRS resource includes 8 antenna ports.

Optionally, the processing module 102 is configured to:
determine that the SRS resource configuration information corresponding to the terminal comprises at most two SRS resource sets, in which an SRS resource set is a periodic SRS resource set or a semi-persistent SRS resource set; or
determine that a maximum number of SRS resource sets supported by the terminal is 3, and the SRS resource configuration information comprises at most three SRS resource sets, in which an SRS resource set is a periodic SRS resource set or a semi-persistent SRS resource set, and the antenna switching configuration corresponding to the terminal is 6T8R.

Optionally, one SRS resource set includes 2 SRS resources, and one SRS resource includes 4 antenna ports; or
one SRS resource set includes 4 SRS resources, and one SRS resource includes 2 antenna ports; or
one SRS resource set includes 4 SRS resources, and one SRS resource includes 4 antenna ports; or
one SRS resource set includes 3 SRS resources, one SRS resource includes 4 antenna ports, and each of the other two SRS resources includes 2 antenna ports.

Optionally, the processing module 102 is configured to:
determine a non-periodic SRS resource configuration included in the SRS resource configuration information according to an antenna structure type of the terminal, in which the antenna switching configuration of the terminal is 6T8R.

Optionally, the processing module 102 is configured to:
in response to the antenna structure type of the terminal being a first type, determine that the non-periodic SRS resource configuration includes at most three non-periodic SRS resource sets; or
in response to the antenna structure type of the terminal being a second type, determine that the non-periodic SRS resource configuration includes at most two non-periodic SRS resource sets; or
in response to the antenna structure type of the terminal being a second type, determine that the non-periodic SRS resource configuration includes at most four non-periodic SRS resource sets.

Optionally, the processing module 102 is configured to:
determine a guard interval between the non-periodic SRS resource sets according to a protocol; or
determine a guard interval between the non-periodic SRS resource sets according to a configuration of the network device.

Optionally, the processing module 102 is configured to:
in response to the antenna structure type of the terminal being a first type, determine that the non-periodic SRS resource configuration includes three non-periodic SRS resources, in which one non-periodic SRS resource includes 4 antenna ports, and each of the other two non-periodic SRS resources includes 2 antenna ports; or
in response to the antenna structure type of the terminal being a second type, determine that the non-periodic SRS resource configuration includes two non-periodic SRS resources, in which one non-periodic SRS resource includes 4 antenna ports, and there is a guard interval between the two non-periodic SRS resources; or
in response to the antenna structure type of the terminal being a second type, determine that the non-periodic SRS resource configuration includes four non-periodic SRS resources, in which one non-periodic SRS resource includes 2 antenna ports, and there is a guard interval between at least two non-periodic SRS resources; or
in response to the antenna structure type of the terminal being a second type, determine that the non-periodic SRS resource configuration includes four non-periodic SRS resources, in which one non-periodic SRS resource includes 4 antenna ports, and there is a guard interval between every two non-periodic SRS resources.

Optionally, the processing module 102 is configured to:
determine the guard interval between the non-periodic SRS resources according to a protocol; or
determine the guard interval between the non-periodic SRS resources according to a configuration of the network device; or
determine the guard interval between the non-periodic SRS resources according to a capability of the terminal.

Optionally, the transceiver module 101 is configured to: receive indication information sent by the terminal, in which the indication information is used to indicate antenna port information of the terminal.

The processing module 102 is configured to: determine a number of transmitting antenna ports of the terminal according to the indication information.

Optionally, the indication information includes at least one of the following:
a maximum number of supported SRS resource sets;
a supported antenna switching configuration or a combination of supported antenna switching configurations
an antenna structure type indicator; or
a supported SRS resource configuration identifier.

It will be appreciated that the communication apparatus 100 may be a terminal, an apparatus in the terminal, or an apparatus capable of being used in combination with the terminal.

The communication apparatus 100 is provided on the terminal side.

The transceiver module 101 is configured to receive SRS resource configuration information sent by a network device, in which an antenna switching configuration corresponding to the SRS resource configuration information includes 6 transmitting chains and 8 receiving chains and/or 8 transmitting chains and 8 receiving chains.

Optionally, the SRS resource configuration information includes at most one non-periodic SRS resource set; or
the SRS resource configuration information includes at most two SRS resource sets, in which an SRS resource set is a periodic SRS resource set or a semi-persistent SRS resource set; or
a maximum number of SRS resource sets supported by the terminal is 3, and the SRS resource configuration information includes at most three SRS resource sets, in which an SRS resource set is a periodic SRS resource set or a semi-persistent SRS resource set, and the antenna switching configuration corresponding to the terminal is 8T8R.

Optionally, one SRS resource set includes one SRS resource, and one SRS resource includes 8 antenna ports.

Optionally, the SRS resource configuration information includes at most two SRS resource sets, in which an SRS resource set is a periodic SRS resource set or a semi-persistent SRS resource set; or
a maximum number of SRS resource sets supported by the terminal is 3, and the SRS resource configuration information includes at most three SRS resource sets, in which an SRS resource set is a periodic SRS resource set or a semi-persistent SRS resource set, and the antenna switching configuration corresponding to the terminal is 6T8R.

Optionally, one SRS resource set includes 2 SRS resources, and one SRS resource includes 4 antenna ports; or
one SRS resource set includes 4 SRS resources, and one SRS resource includes 2 antenna ports; or
one SRS resource set includes 4 SRS resources, and one SRS resource includes 4 antenna ports; or
one SRS resource set includes 3 SRS resources, one SRS resource includes 4 antenna ports, and each of the other two SRS resources includes 2 antenna ports.

Optionally, the antenna structure type of the communication apparatus is a first type, and the non-periodic SRS resource configuration includes at most three non-periodic SRS resource sets; or
the antenna structure type of the communication apparatus is a second type, and the non-periodic SRS resource configuration includes at most two non-periodic SRS resource sets; or
the antenna structure type of the communication apparatus is a second type, and the non-periodic SRS resource configuration includes at most four non-periodic SRS resource sets, in which the corresponding antenna switching configuration of the communication apparatus is 6T8R.

Optionally, the antenna structure type of the communication apparatus is a first type, and the SRS resource configuration information includes three non-periodic SRS resources, in which one non-periodic SRS resource includes 4 antenna ports, and each of the other two non-periodic SRS resources includes 2 antenna ports; or
the antenna structure type of the communication apparatus is a second type, and the SRS resource configuration information includes two non-periodic SRS resources, in which one non-periodic SRS resource includes 4 antenna ports, and there is a guard interval between the two non-periodic SRS resources; or
the antenna structure type of the communication apparatus is a second type, and the SRS resource configuration information includes four non-periodic SRS resources, in which one non-periodic SRS resource includes 2 antenna ports, and there is a guard interval between at least two non-periodic SRS resources; or
the antenna structure type of the communication apparatus is a second type, and the SRS resource configuration information includes four non-periodic SRS resources, in which one non-periodic SRS resource includes 4 antenna ports, there is a guard interval between two non-periodic SRS resources, and the antenna switching configuration corresponding to the communication apparatus is 6T8R.

Optionally, the transceiver module 101 is configured to:
send indication information to the network device, in which the indication information is used to indicate antenna port information of the terminal.

Optionally, the indication information includes at least one of the following:
a maximum number of supported SRS resource sets;
a supported antenna switching configuration or a combination of supported antenna switching configurations;
an antenna structure type indicator; or
a supported SRS resource configuration identifier.

In the invention, the network device configures the SRS resource configuration information corresponding to the antenna switching configuration of 6T8R and/or 8T8R for the communication apparatus with 8 transmitting antenna ports, to provide a condition for supporting the communication apparatus to realize uplink transmission using a maximum number of 8 antenna ports, thereby improving the uplink transmission rate.

As illustrated in FIG. 11, FIG. 11 is a schematic diagram of a communication apparatus according to an embodiment of the invention. The communication apparatus 110 may be a network device, a terminal, or a chip, a chip system or a processor that supports the network device to realize the above-described methods, or a chip, a chip system or a processor that supports the terminal to realize the above-described methods. The apparatus may be used to realize the methods described in the above method embodiments with reference to the description of the above-described method embodiments.

The communication apparatus 110 may include one or more processors 1101. The processor 1101 may be a general purpose processor or a dedicated processor, such as, a baseband processor or a central processor. The baseband processor is used for processing communication protocols and communication data. The central processor is used for controlling the communication apparatus (e.g., base station, baseband chip, terminal, terminal chip, DU, or CU), executing computer programs, and processing data of the computer programs.

Optionally, the communication apparatus 110 may include one or more memories 1102 on which computer programs 1104 may be stored. The processor 1101 executes the computer programs 1104 to cause the communication apparatus 110 to perform the methods described in the above method embodiments. Optionally, the memory 1102 may also store data. The communication apparatus 110 and the memory 1102 can be provided separately or integrated together.

Optionally, the communication apparatus 110 may also include a transceiver 1105 and an antenna 1106. The transceiver 1105 may be referred to as transceiver unit, transceiver machine, or transceiver circuit, for realizing the transceiver function. The transceiver 1105 may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication apparatus 110 may also include one or more interface circuits 1107. The interface circuits 1107 are used to receive code instructions and transmit them to the processor 1101. The processor 1101 runs the code instructions to cause the communication apparatus 110 to perform the method described in the method embodiments.

If the communication apparatus 110 is a network device, the processor 1101 is used to perform steps 201-202 in FIG. 2, steps 402-404 in FIG. 4, and steps 702-704 in FIG. 7.

If the communication apparatus 110 is a terminal, the transceiver 1105 is used to perform step 801 in FIG. 8, and steps 901-902 in FIG. 9.

In an implementation, the processor 1101 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or integrated together. The transceiver circuit, interface, or interface circuit described above may be used for code/data reading and writing, or may be used for signal transmission or delivery.

In an implementation, the processor 1101 may store computer programs 1103. When the processor 1101 runs the computer programs 1103, the communication apparatus 110 is caused to perform the methods described in the method embodiments above. The computer programs 1103 may be solidified in the processor 1101, in which case the processor 1101 may be implemented by hardware.

In an implementation, the communication apparatus 110 may include circuits. The circuits may implement the sending, receiving or communicating function in the preceding method embodiments. The processor and transceiver described in this invention may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the above description of embodiments may be a network device or an access network device (e.g., the terminal in the above method embodiments), but the scope of the communication apparatus described in the invention is not limited thereto, and the structure of the communication apparatus may not be limited by FIG. 11. The communication apparatus may be a stand-alone device or may be part of a larger device. For example, the described communication apparatus may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

The case where the communication apparatus may be a chip or chip system may be referred to the schematic diagram of a chip shown in FIG. 12. In FIG. 12, the chip includes a processor 1201 and an interface 1203. There may be one or more processors 1201, and there may be multiple interfaces 1203.

For the case where the chip is used to implement the functions of the network device in the embodiments of the invention,

the interface 1203 is used to implement step 203 in FIG. 2, steps 401 and 405 in FIG. 4, and steps 701 and 705 in FIG. 7.

For the case where the chip is used to implement the functions of the terminal in the embodiments of the invention,

the interface 1203 is used to implement step 801 in FIG. 8, and steps 901-902 in FIG. 9.

Optionally, the chip further includes a memory 1202 used for storing necessary computer programs and data.

It is understandable by those skilled in the art that various illustrative logical blocks and steps listed in the embodiments of the invention may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the invention.

The invention also provides a readable storage medium having instructions stored thereon. When the instructions are executed by a computer, the function of any of the method embodiments described above is implemented.

The invention also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the invention may be implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

It is further understood that the term "multiple" in the invention refers to two or more, which is the similar for other quantifiers. The term "and/or" describes a relation of associated objects, which indicates three relations, for example, "A and/or B" indicates that A exists alone, A and B both exist, and B exists alone. The character "/" generally indicates that the associated objects prior to and after the character "/" is an "or" relation. The terms "a", "said" and "the" in the singular form are also intended to include the plural form, unless the context clearly indicates otherwise.

It is further understood that although the operations are depicted in the accompanying drawings in a particular order in the embodiments of the invention, this should not be construed as requiring that the operations be performed in the particular sequence shown or in a serial sequence, or that all of the operations shown be performed to obtain the desired results. Multitasking and parallel processing may be advantageous in particular environments.

Those skilled in the art understand that "first", "second", and other various numerical numbers involved in the invention are only described for the convenience of differentiation, and are not used to limit the scope of the embodiments of the invention, or indicate the order of precedence.

The term "at least one" in the invention may also be described as one or more, and the term "multiple" may be two, three, four, or more, which is not limited in the invention. In the embodiments of the invention, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this invention may be configured or predefined. The values of information in the tables are merely examples and may be configured to other values, which are not limited by the invention. In configuring the correspondence between the information and the parameter, it is not necessarily required that all the correspondences illustrated in the tables must be configured. For example, the correspondences illustrated in certain rows in the tables in this invention may not be configured. For another example, the above tables may be adjusted appropriately, such as splitting, combining, and the like. The names of the parameters shown in the titles of the above tables may be other names that may be understood by the communication apparatus, and the values or representations of the parameters may be other values or representations that may be understood by the communication apparatus. Each of the above tables may also be implemented with other data structures, such as, arrays, queues, containers, stacks, linear tables, pointers, chained lists, trees, graphs, structures, classes, heaps, and Hash tables.

The term "predefine" in this invention may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the invention.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

Other embodiments of the invention will be apparent to those skilled in the art from consideration of the specification and practice of the invention disclosed here. This application is intended to cover any variations, uses, or adaptations of the invention following the general principles thereof and including such departures from the invention as come within known or customary practice in the art. It is intended that the specification and examples are considered as exemplary only, with a true scope and spirit of the invention being indicated by the following claims.

It will be appreciated that the invention is not limited to the exact construction that has been described above and illustrated in the accompanying drawings, and that various modifications and changes can be made without departing from the scope thereof. It is intended that the scope of the invention only be limited by the appended claims.

## Claims

1. A method for determining sounding reference signal (SRS) resource configuration information, performed by a network device, comprising:
determining that an antenna switching configuration corresponding to a terminal comprises 6 transmitting chains and 8 receiving chains and/or 8 transmitting chains and 8 receiving chains, wherein the terminal has 8 transmitting antenna ports;
determining SRS resource configuration information corresponding to the terminal according to the antenna switching configuration; and
sending the SRS resource configuration information to the terminal.

2. The method of claim 1, wherein
the SRS resource configuration information comprises at most one non-periodic SRS resource set; or
the SRS resource configuration information comprises at most two SRS resource sets, wherein an SRS resource set is a periodic SRS resource set or a semi-persistent SRS resource set; or
a maximum number of SRS resource sets supported by the terminal is 3, and the SRS resource configuration information comprises at most three SRS resource sets, wherein an SRS resource set is a periodic SRS resource set or a semi-persistent SRS resource set;
wherein the antenna switching configuration corresponding to the terminal comprises 8 transmitting chains and 8 receiving chains.

3. The method of claim 2, wherein one SRS resource set comprises one SRS resource, and one SRS resource comprises 8 antenna ports.

4. The method of claim 1, wherein
the SRS resource configuration information corresponding to the terminal comprises at most two SRS resource sets, wherein an SRS resource set is a periodic SRS resource set or a semi-persistent SRS resource set; or a maximum number of SRS resource sets supported by the terminal is 3, and the SRS resource configuration information comprises at most three SRS resource sets, wherein an SRS resource set is a periodic SRS resource set or a semi-persistent SRS resource set;
wherein the antenna switching configuration corresponding to the terminal comprises 6 transmitting chains and 8 receiving chains.

5. The method of claim 4, wherein
one SRS resource set comprises 2 SRS resources, and one SRS resource comprises 4 antenna ports; or
one SRS resource set comprises 4 SRS resources, and one SRS resource comprises 2 antenna ports; or
one SRS resource set comprises 4 SRS resources, and one SRS resource comprises 4 antenna ports; or
one SRS resource set comprises 3 SRS resources, one SRS resource comprises 4 antenna ports, and each of the other two SRS resources comprises 2 antenna ports.

6. The method of claim 1, further comprising:
determining a non-periodic SRS resource configuration comprised in the SRS resource configuration information according to an antenna structure type of the terminal, wherein the antenna switching configuration corresponding to the terminal comprises 6 transmitting chains and 8 receiving chains.

7. The method of claim 6, wherein
the antenna structure type is a first type, and the non-periodic SRS resource configuration comprises at most three non-periodic SRS resource sets; or
the antenna structure type is a second type, and the non-periodic SRS resource configuration comprises at most two non-periodic SRS resource sets; or
the antenna structure type is a second type, and the non-periodic SRS resource configuration comprises at most four non-periodic SRS resource sets.

8. The method of claim 7, further comprising:
determining a guard interval between the non-periodic SRS resource sets according to a protocol; or
determining a guard interval between the non-periodic SRS resource sets according to a configuration of the network device.

9. The method of claim 6, wherein
the antenna structure type is a first type, and the non-periodic SRS resource configuration comprises three non-periodic SRS resources, wherein one non-periodic SRS resource comprises 4 antenna ports, and each of the other two non-periodic SRS resources comprises 2 antenna ports; or
the antenna structure type is a second type, and the non-periodic SRS resource configuration comprises two non-periodic SRS resources, wherein each non-periodic SRS resource comprises 4 antenna ports, and there is a guard interval between the two non-periodic SRS resources; or
the antenna structure type is a second type, and the non-periodic SRS resource configuration comprises four non-periodic SRS resources, wherein one non-periodic SRS resource comprises 2 antenna ports, and there is a guard interval between at least two non-periodic SRS resources; or
the antenna structure type is a second type, and the non-periodic SRS resource configuration comprises four non-periodic SRS resources, wherein one non-periodic SRS resource comprises 4 antenna ports, and there is a guard interval between every two non-periodic SRS resources.

10. The method of claim 9, further comprising:
determining the guard interval between the non-periodic SRS resources according to a protocol; or
determining the guard interval between the non-periodic SRS resources according to a configuration of the network device; or
determining the guard interval between the non-periodic SRS resources according to a capability of the terminal.

11. The method of any one of claims 1-10, further comprising:
receiving indication information sent by the terminal, wherein the indication information is used to indicate antenna port information of the terminal; and
determining a number of transmitting antenna ports of the terminal according to the indication information.

12. The method of claim 11, wherein the indication information comprises at least one of following:
a maximum number of supported SRS resource sets;
a supported antenna switching configuration or a combination of supported antenna switching configurations;
an antenna structure type indicator; or
a supported SRS resource configuration identifier.

13. A method for determining sounding reference signal (SRS) resource configuration information, performed by a terminal, comprising:
receiving SRS resource configuration information sent by a network device, wherein an antenna switching configuration corresponding to the SRS resource configuration information comprises 6 transmitting chains and 8 receiving chains and/or 8 transmitting chains and 8 receiving chains.

14. The method of claim 13, wherein
the SRS resource configuration information comprises at most one non-periodic SRS resource set; or
the SRS resource configuration information comprises at most two SRS resource sets, wherein an SRS resource set is a periodic SRS resource set or a semi-persistent SRS resource set; or
a maximum number of SRS resource sets supported by the terminal is 3, and the SRS resource configuration information comprises at most three SRS resource sets, wherein an SRS resource set is a periodic SRS resource set or a semi-persistent SRS resource set;
wherein the antenna switching configuration corresponding to the terminal comprises 8 transmitting chains and 8 receiving chains.

15. The method of claim 14, wherein one SRS resource set comprises one SRS resource, and one SRS resource comprises 8 antenna ports.

16. The method of claim 13, wherein
the SRS resource configuration information comprises at most two SRS resource sets, wherein an SRS resource set is a periodic SRS resource set or a semi-persistent SRS resource set; or
a maximum number of SRS resource sets supported by the terminal is 3, and the SRS resource configuration information comprises at most three SRS resource sets, wherein an SRS resource set is a periodic SRS resource set or a semi-persistent SRS resource set;
wherein the antenna switching configuration corresponding to the terminal comprises 6 transmitting chains and 8 receiving chains.

17. The method of claim 16, wherein
one SRS resource set comprises 2 SRS resources, and one SRS resource comprises 4 antenna ports; or
one SRS resource set comprises 4 SRS resources, and one SRS resource comprises 2 antenna ports; or
one SRS resource set comprises 4 SRS resources, and one SRS resource comprises 4 antenna ports; or
one SRS resource set comprises 3 SRS resources, one SRS resource comprises 4 antenna ports, and each of the other two SRS resources comprises 2 antenna ports.

18. The method of claim 13, wherein
an antenna structure type of the terminal is a first type, and the non-periodic SRS resource configuration comprises at most three non-periodic SRS resource sets; or
an antenna structure type of the terminal is a second type, and the non-periodic SRS resource configuration comprises at most two non-periodic SRS resource sets; or
an antenna structure type of the terminal is a second type, and the non-periodic SRS resource configuration comprises at most four non-periodic SRS resource sets;
wherein the antenna switching configuration corresponding to the terminal comprises 6 transmitting chains and 8 receiving chains.

19. The method of claim 13, wherein
an antenna structure type of the terminal is a first type, and the SRS resource configuration information comprises three non-periodic SRS resources, wherein one non-periodic SRS resource comprises 4 antenna ports, and each of the other two non-periodic SRS resources comprises 2 antenna ports; or
an antenna structure type of the terminal is a second type, and the SRS resource configuration information comprises two non-periodic SRS resources, wherein one non-periodic SRS resource comprises 4 antenna ports, and there is a guard interval between the two non-periodic SRS resources; or
an antenna structure type of the terminal is a second type, and the SRS resource configuration information comprises four non-periodic SRS resources, wherein one non-periodic SRS resource comprises 2 antenna ports, and there is a guard interval between at least two non-periodic SRS resources; or
an antenna structure type of the terminal is a second type, and the SRS resource configuration information comprises four non-periodic SRS resources, wherein one non-periodic SRS resource comprises 4 antenna ports, and there is a guard interval between every two non-periodic SRS resources;
wherein the antenna switching configuration corresponding to the terminal is 6T8R.

20. The method of any one of claims 13-19, comprising:
sending indication information to the network device, wherein the indication information is used to indicate antenna port information of the terminal.

21. The method of claim 20, wherein the indication information comprises at least one of following:
a maximum number of supported SRS resource sets;
a supported antenna switching configuration or a combination of supported antenna switching configurations;
an antenna structure type indicator; or
a supported SRS resource configuration identifier.

22. A communication apparatus, comprising:
a processing module, configured to determine that an antenna switching configuration corresponding to a terminal comprises 6 transmitting chains and 8 receiving chains and/or 8 transmitting chains and 8 receiving chains, and to determine SRS resource configuration information corresponding to the terminal according to the antenna switching configuration, wherein the terminal has 8 transmitting antenna ports; and
a transceiver module, configured to send the SRS resource configuration information to the terminal.

23. A communication apparatus, comprising:
a transceiver module, configured to receive SRS resource configuration information sent by a network device, wherein an antenna switching configuration corresponding to the SRS resource configuration information comprises 6 transmitting chains and 8 receiving chains and/or 8 transmitting chains and 8 receiving chains.

24. A communication apparatus comprising a processor and a memory, wherein the memory stores computer programs, and the processor executes the computer programs stored in the memory to cause the apparatus to implement the method of any one of claims 1-12.

25. A communication apparatus comprising a processor and a memory, wherein the memory stores computer programs, and the processor executes the computer programs stored in the memory to cause the apparatus to implement the method of any one of claims 13-21.

26. A computer readable storage medium having instructions stored thereon, wherein when the instructions are executed, the method of any one of claims 1-12 is implemented.

27. A computer readable storage medium having instructions stored thereon, wherein when the instructions are executed, the method of any one of claims 13-21 is implemented.
